Europäisches Patentamt

European Patent Office

Office européen des brevets

(19)

(11) Veröffentlichungsnummer: **0 033 312**
**B1**

(12) # EUROPÄISCHE PATENTSCHRIFT

(45) Veröffentlichungstag der Patentschrift:
20.07.83

(51) Int. Cl.³: **B 23 K 9/06**

(21) Anmeldenummer: 81890013.6

(22) Anmeldetag: 23.01.81

(54) Schutzgasschweissanlage mit automatischem Drahtvorschub.

(30) Priorität: 23.01.80 AT 345/80

(43) Veröffentlichungstag der Anmeldung:
05.08.81 Patentblatt 81/31

(45) Bekanntmachung des Hinweises auf die Patenterteilung:
20.07.83 Patentblatt 83/29

(84) Benannte Vertragsstaaten:
CH DE GB LI SE

(56) Entgegenhaltungen:
DE-A-2 035 897
DE-A-2 720 738

(73) Patentinhaber: ELIN-UNION Aktiengesellschaft für elektrische Industrie, Penzinger Strasse 76, A-1141 Wien (AT)

(72) Erfinder: Walther, Helge, Diesterwegg. 39, A-1140 Wien (AT)

(74) Vertreter: Krause, Peter, Penzinger Strasse 76, A-1141 Wien (AT)

Schutzgasschweissanlage mit automatischem Drahtvorschub

Die Erfindung betrifft eine Schutzgasschweissanlage mit automatischem Drahtvorschub, bei welcher die Düse aus einer Innen- und einer Aussendüse besteht, wobei die Innendüse den Draht führt und der Raum zwischen Innen- und Aussendüse zur Gasführung verwendbar ist. Eine derartige Vorrichtung ist allgemein bekannt.

Beim Schutzgasschweissen treten beim Zünden der Elektrode, also beim Ansatzpunkt bzw. beim Beginn des Schweissvorganges grosse Probleme auf. Es entsteht durch den Kurzzeitigen Kurzschluss beim Zünden des Lichtbogens der zu verschweissenden kalten Werkstücke mit der anfänglich ebenfalls kalten Elektrode eine schlechte Schweissstelle. Es kommt weiters auch zur Tropfenbildung, das heisst die abschmelzende Elektrode bindet sich nicht richtig mit dem Werkstück.

Es wurde daher vorgeschlagen, beim Ansatzpunkt, also beim Zünden und eine kurze Zeit danach, mit erhöhtem Strom zu schweissen. Dieser erhöhte Strom wird sodann durch einen Regler relativ rasch auf den normalen Schweissstrom zurückgeregelt. Aufgrund von Prüfberichten bringt diese Methode keinerlei Verbesserungen bei den Ansatzpunkten der Schweissung.

Die Aufgabe der Erfindung besteht daher darin, eine Methode zu schaffen, bei welcher die Schweissstelle auch beim Ansatzpunkt einwandfrei ist.

Die Aufgabe wird durch die Erfindung gelöst. Die Erfindung ist dadurch gekennzeichnet, dass die Innen- und/oder Aussendüse beim Zünden zur Stromführung dient, wobei die Spitze der Düsen mit einem temperaturbeständigen und elektrisch leitenden Überzug, insbesondere Wolframüberzug, versehen ist und die Drahtzuführung durch die Innendüse verzögert einsetzt. Durch die Erfindung ist es erstmals möglich, auch am Ansatzpunkt der Schweissung ein optimales Schweissgefüge an der Schweissstelle zu erreichen. Es wird nämlich das Werkstück durch einen Lichtbogen, welcher von der Innen- oder Aussendüse zum Werkstück brennt, vorerwärmt, wodurch es bei verzögerter Zuführung des Schweissdrahtes zum Werkstück zu keinen Bindefehlern kommt bzw. das Schweissgefüge an dieser Stelle auch keine Mängel aufweist. Der Lichtbogenübergang von der Innen- bzw. Aussendüse auf den Schweissdraht erfolgt schlagartig. Der temperaturbeständige bzw. Wolframüberzug an der Spitze der beiden Düsen ist von besonderem Vorteil, da die Düsen normalerweise aus Messing bestehen und deren Spitzen durch den Lichtbogen relativ bald abschmoren würden. Es ist daher ersichtlich, dass durch den temperaturbeständigen Überzug an den Düsenspitzen deren Lebensdauer wesentlich verlängert wird.

Nach einer Ausgestaltung der Erfindung ist die Innen und/oder Aussendüse an der Spitze gestaucht. Dadurch wird die Strombelastung der Düsenspitze verringert.

Von Vorteil ist ferner, dass die Lichtbogenzündung mit Hochfrequenz oder Stromüberlagerung erfolgt. Dadurch wird eine direkte Berührung der Düsenspitze mit dem Werkstück vermieden.

Abschliessend wird nun an Hand eines Ausführungsbeispieles der Düse die Erfindung näher erläutert. Die Innendüse 1, welche vorzugsweise aus Messing oder Kupfer besteht, führt den Schweissdraht 2. Die Innendüse 1 umgibt mit einem gewissen Zwischenraum 4, dessen Querschnitt einen Ring darstellt, die Aussendüse 3. Der Zwischenraum 4 zwischen Innendüse 1 und Aussendüse 3 dient zur Schutzgasführung. Als Schutzgas wird z.B. Argongas verwendet. Beide Düsen 1 und 3 sind mit einem temperaturbeständigen Überzug 5, welcher aus Wolfram besteht, überzogen. Es ist aber auch möglich, dass die Innendüse 1 sowie die Aussendüse 3 komplett aus Wolfram gefertigt sind.

Beim Ansatzpunkt der Schweissung wird entweder durch Berührung mit dem Werkstück 6 oder durch Hochfrequenzzündung ein Lichtbogen zwischen dem Wolframüberzug 5 der Innendüse 1 und dem Werstück 6 gezündet oder zwischen dem Wolframüberzug 5 der Aussendüse 3 und dem Werkstück 6. Bei einer Lichtbogenzündung zwischen Aussendüse 3 und Werkstück 6 muss diese Düse isoliert werden, da sie zur Stromführung dient. Wird die Innendüse 1 durch Berührung zur Lichtbogenzündung verwendet, ist eine Mechanik notwendig, welche die Innendüse 1 kurzzeitig nach vorne auf das Werkstück 6 schnellen lässt, wodurch der Lichtbogen gezündet wird. Dieser Vorgang wäre z.B. auch mit einer kurzen Innendüse möglich, welche auf die ursprüngliche Innendüse 1 aufschiebbar ist. Hierbei müsste die Drahtzuführung nicht verzögert erfolgen.

Wenn der Lichtbogen zwischen dem Werkstück 6 und einer der beiden Düsen 1 und 3 brennt und das Werkstück 6 ausreichend erwärmt ist, setzt die Schweissdrahtzuführung ein. Der Übergang des Lichtbogens von einer der Düsen 1 oder 3 auf den Schweissdraht 2 erfolgt schlagartig. Nach diesem Lichtbogenübergang erfolgt die Schweissung nach bekannter Methode.

Die Schutzgaszuführung setzt schon einige Zeit vor Beginn der Lichtbogenzündung ein.

Alle beschriebenen Vorgänge erfolgen in Bruchteilen von Sekunden.

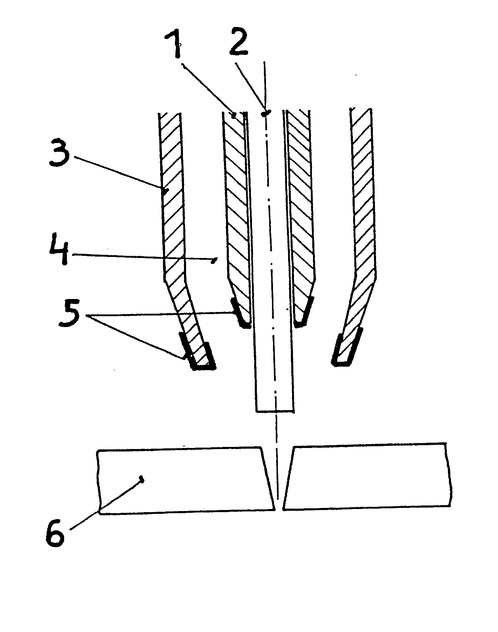

## Patentansprüche

1. Schutzgasschweissanlage mit automatischem Drahtvorschub, bei welcher die Düse aus einer Innen- (1) und einer Aussendüse (3) besteht, wobei die Innendüse den Draht (2) führt und der Raum zwischen Innen- und Aussendüse zur Gasführung verwendbar ist, dadurch gekennzeichnet, dass die Innen- (1) und/oder Aussendüse (3) beim Zünden zur Stromführung dient, wobei die Spitze der Düsen mit einem temperaturbeständigen und elektrisch leitenden Überzug (5), insbesondere Wolframüberzug, versehen ist und die Drahtzuführung durch die Innendüse (1) verzögert einsetzt.

2. Schutzgasschweissanlage mit automatischem Drahtvorschub, dadurch gekennzeichnet, dass die Innen- (1) und/oder Aussendüse (3) an der Spitze gestaucht ist.

3. Schutzgasschweissanlage mit automatischem Drahtvorschub, dadurch gekennzeichnet, dass die Lichtbogenzündung mit Hochfrequenz oder Stromüberlagerung erfolgt.

## Revendications

1. Installation de soudage sous protection gazeuse avec avancement automatique du fil, dans laquelle la buse est formée d'une buse intérieure (1) et d'une buse extérieure (3), la buse intérieure (2) guidant le fil et l'espacement entre buses intérieure et extérieure pouvant servir à l'amenée du gaz, caractérisée par le fait que la buse intérieure (1) et/ou la buse extérieure (3) servent à conduire le courant lors de l'amorçage, le bout des buses étant muni d'un revêtement (5) résistant à la température et conducteur de l'électricité, en particulier d'un revêtement de tungstène, et l'amenée du fil par la buse intérieure (1) intervenant avec retard.

2. Installation de soudage sous protection gazeuse avec avancement automatique du fil, caractérisée par le fait que la buse intérieure (1) et/ou la buse extérieure (3) sont refoulées au bout.

3. Installation de soudage sous protection gazeuse avec avancement automatique du fil, caractérisée par le fait que l'amorçage de l'arc s'effectue par haute fréquence ou superposition de courant.

## Claims

1. Shielded arc-welding apparatus with automatic wire feed, in which the nozzle comprises an inner nozzle (1) and an outer nozzle (3), wherein the inner nozzle supplies the wire (2) and the space between the inner and outer nozzles may be used for gas regulation, characterized in that the inner (1) and/or outer nozzle (3) serves for the current supply during ignition, wherein the tip of the nozzle is provided with a temperature-resistant and electrically conductive coating (5), in particular a tungsten coating, and the wire supply takes place through the inner nozzle (1) in a delayed manner.

2. Shielded arc-welding apparatus with automatic wire feed, characterized in that the inner nozzle (1) and/or outer nozzle (3) is upset at its tip.

3. Shielded arc-welding apparatus with automatic wire feed, characterized in that the arc ignition takes place at high frequency or with current superposition.